# EUROPEAN PATENT APPLICATION

(11) **EP 2 733 586 A1**
(43) Date of publication of application: **21.05.2014**
(21) Application number: 12192646.3
(22) Date of filing: 14.11.2012
(51) Int. Cl.: G06F 3/0354, H01Q 21/28, H04B 7/08, H04M 1/02

(54) **A device system that performs radio-frequency matching with a stylus antenna**

(71) Applicant: BlackBerry Limited, Waterloo, ON N2K 0A7 (CA)
(72) Inventor: Huynh, Son Trung, Waterloo, Ontario N2L 3W8 (CA); Akhavan Fomani, Armin, Waterloo, Ontario N2L 3W8 (CA); Mercea, Cornel, Waterloo, Ontario N2L 3W8 (CA)
(74) Representative: MERH-IP Matias Erny Reichl Hoffmann

(57) **Abstract**

A device system is provided, comprising: a stylus comprising a first antenna; a receptacle for the stylus; a second antenna; and, at least one antenna tuning circuit enabled to: perform RF (radio-frequency) matching with the first antenna when the stylus is present in the receptacle to at least one of transmit and receive data via the first antenna; and, perform RF matching with the second antenna when the stylus is not present in the receptacle to at least one of transmit and receive the data via the second antenna.

## Description

### FIELD

The specification relates generally to antennas, and specifically to a device system that performs radio-frequency matching with a stylus antenna.

### BACKGROUND

In mobile devices, there is limited space to place antennas as most antennas are internal, and must be placed in a position where the user will not interfere with them. Further, antennas also place restrictions on materials a chassis of a device can be made from as many materials will interfere with reception of the antenna.

### SUMMARY

An aspect of the specification provides a device system comprising: a stylus comprising a first antenna; a receptacle for the stylus; a second antenna; and, at least one antenna tuning circuit enabled to: perform RF (radio-frequency) matching with the first antenna when the stylus is present in the receptacle to at least one of transmit and receive data via the first antenna; and, perform RF matching with the second antenna when the stylus is not present in the receptacle to at least one of transmit and receive the data via the second antenna.

The device system can further comprise at least one electrical contact for electrically connecting the antenna tuning circuit to the first antenna when the stylus is present in the receptacle. The at least one electrical contact can comprise an RF (radio-frequency) contact and a ground contact in the receptacle. The stylus can comprise a corresponding RF contact and a corresponding ground contact for connecting, respectively to the RF contact and the ground contact when the stylus is present in the receptacle.

The receptacle can comprise one or more of a slot, a groove and a container.

The receptacle can comprise one or more of non-conducting materials, non-magnetic materials and plastic.

The receptacle can be enabled to retain the stylus along a longitudinal side of the stylus.

The device system can further comprise a processor enabled to: detect when the stylus is present and not present in the receptacle; and, in response, activate a tuning procedure to the perform RF matching at the at least one antenna tuning circuit to account for an electrical connection, or lack thereof, between the at least one antenna tuning circuit and the first antenna.

The at least one antenna tuning circuit can be further enabled to switch between the first antenna and the second antenna when the stylus is respectively present and not present in the receptacle.

The device system can further comprise a switch for switching the at least one antenna tuning circuit between the first antenna and the second antenna when the stylus is respectively present and not present in the receptacle.

The at least one antenna tuning circuit can be further enabled to perform RF matching with both the first antenna and the second antenna when the stylus is present in the receptacle.

The at least one antenna tuning circuit can be further enabled to: perform RF matching with the first antenna, and not the second antenna, when the stylus is present in the receptacle; and perform RF matching with the second antenna, and not the first antenna, when the stylus is not present in the receptacle.

The device system can further comprise a chassis. The chassis can comprise the receptacle. The receptacle can be mounted on the chassis. The receptacle can be enabled to hold the stylus at least partially outside the chassis when the stylus is present in the receptacle.

The first antenna can comprise an active antenna and the stylus can further comprise a battery receptacle for receiving a battery for powering the active antenna. The device system can further comprise a communication interface enabled to: communicate with the active antenna when the stylus is not present in the receptacle and when the communication interface is in range of the active antenna.

The device system can further comprise a chassis and an electrical tether for both physically tethering the stylus to the chassis, and electrically connecting the first antenna to the at least one antenna tuning circuit.

The at least one antenna tuning circuit can be further enabled to: perform RF matching with the first antenna via the electrical tether when the stylus is not present in the receptacle; and, perform RF matching with the second antenna when an electrical connection with first antenna is severed.

### BRIEF DESCRIPTIONS OF THE DRAWINGS

For a better understanding of the various implementations described herein and to show more clearly how they may be carried into effect, reference will now be made, by way of example only, to the accompanying drawings in which:

Fig. 1 depicts a schematic diagram of a device system that performs radio-frequency (RF) matching with a stylus antenna, according to non-limiting implementations.

Fig. 2 depicts various perspective views of the device system of Fig. 1 with a stylus present and not present in a receptacle of the device, according to non-limiting implementations.

Fig. 3 depicts the device system of Fig. 1 with a stylus not present in a receptacle of a device, according to non-limiting implementations.

Fig. 4 depicts the device system of Fig. 1 with a stylus present in a receptacle of a device and operating in a mode where RF matching occurs only with the stylus antenna, according to non-limiting implementations.

Fig. 5 depicts the device system of Fig. 1 with a stylus present in a receptacle of a device and operating in a mode where RF matching occurs with both the stylus antenna and a second internal antenna, according to non-limiting implementations.

Fig. 6 depicts various perspective views of an alternative device system that performs radio-frequency (RF) matching with a stylus antenna, with a stylus present and not present in a receptacle of the device, according to non-limiting implementations.

Fig. 7 depicts a schematic diagram of an alternative device system that performs radio-frequency (RF) matching with an active stylus antenna, according to non-limiting implementations.

Fig. 8 depicts a schematic diagram of an alternative device system that performs radio-frequency (RF) matching with a tethered stylus antenna, according to non-limiting implementations.

### DETAILED DESCRIPTION

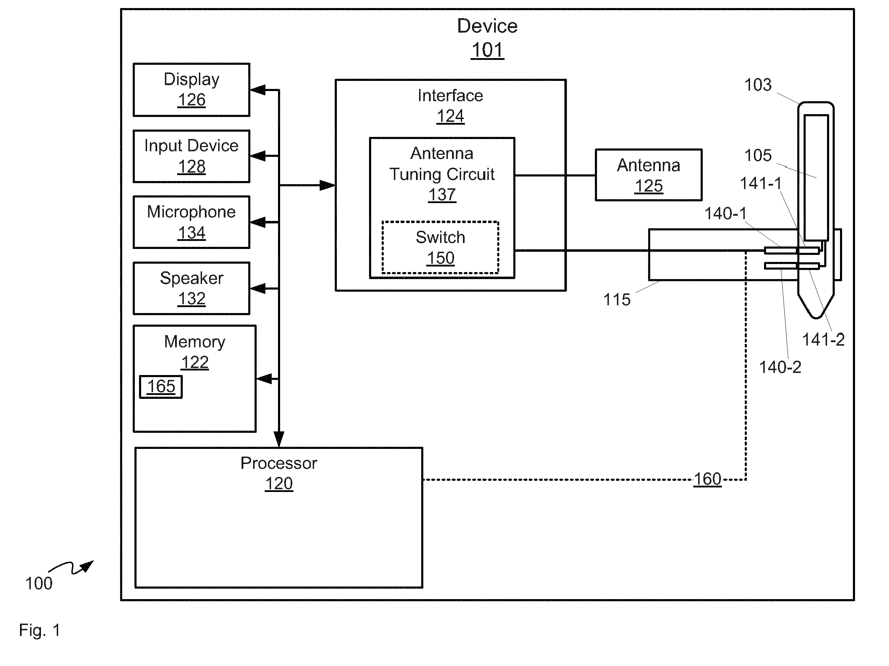

Fig. 1 depicts a schematic diagram of a device system 100 that performs radio-frequency (RF) matching with a tethered stylus antenna, according to non-limiting implementations. Device system 100 comprises a device 101 and a stylus 103, the stylus 103 comprising a first antenna 105, according to non-limiting implementations. Device 101 comprises a receptacle 115 for stylus 103, a processor 120 interconnected with a memory 122, a communications interface 124, a second antenna 125, a display 126, an input device 128, a speaker 132, and a microphone 134. Further, communications interface 124 comprises at least one antenna tuning circuit 137. Communications interface 124 will be interchangeably referred to as interface 124. Antenna tuning circuit 137 will interchangeable be referred to as circuit 137. As will be presently explained, circuit 137 is generally enabled to: perform RF matching with first antenna 105 when stylus 103 is present in receptacle 115 to at least one of transmit and receive data via first antenna 105; and, perform RF matching with second antenna 125 when stylus 103 is not present in receptacle 115 to at least one of transmit and receive the data via second antenna 125.

In other words, antenna 105 integrated into stylus 103 can be use as one or more of a primary antenna and as a component in a multi-antenna system to improve reception at device 101, when antenna 105 is present in receptacle 115, as compared to using second antenna 125 alone, which is generally internal to device 101, with all of the deficiencies of such internal antennas. Indeed, as antenna 105 is integrated into a stylus, fewer physical restrictions are placed on antenna 105, as compared to antenna 125, and hence the surface area of antenna 105 can, for example, be made larger than antenna 125, thereby improving reception at device 101. Further, as will presently be explained, as receptacle 115 can be such that, when antenna 105 is present therein, antenna 105 is at least partially external to device 101, the reception at device 101 is further improved.

Device 101 further comprises one or more electrical contacts 140-1, 140-2, for example at receptacle 115, for electrically connecting circuit 137 to first antenna 105 when stylus 103 is present in receptacle 115. For example, electrical contact 140-1 can comprise an RF (radio-frequency) contact and electrical contact 140-2 can comprise a ground contact (connection to ground not depicted). Similarly, stylus 103 comprises one or more corresponding contacts 141-1, 141-2 which electrically contact respective contacts 140-1, 140-2 when stylus 103 is present in receptacle 115. Contacts 140-1, 140-2 will be interchangeably referred to hereafter, collectively, as contacts 140 and generically as a contact 140. Contacts 141-1, 141-2 will be interchangeably referred to hereafter, collectively, as contacts 141 and generically as a contact 141. Further, contacts 140 can be external to receptacle 115, as long as contact 141 contact contacts 140 when stylus 103 is present in receptacle 115: for example, an end of stylus 103 where contacts 141 are located could extend out of receptacle 115 to contact contacts 140.

In any event, electrical contact 141-1 comprises a corresponding RF contact which electrically connects with RD contact 140-1, and electrical contact 141-2 comprises a corresponding ground contact for electrically connecting with ground contact 140-2 when stylus 103 is present in receptacle 115. Hence, when stylus 103 is present in receptacle 115, antenna 105 is in electrical communication with circuit 137 via contacts 140, 141.

Hence, when stylus 103 is not present in receptacle 115, circuit 137 can be RF tuned to send and receive data via second antenna 125 only, which is generally internal to device 101, and when stylus 103 is present in receptacle 115, circuit 137 can be RF tuned to send and receive data via first antenna 105. In other words, circuit 137 can be enabled to: perform RF matching with first antenna 105, and not second antenna 125, when stylus 103 is present in receptacle 115; and perform RF matching with second antenna 125, and not first antenna 105, when stylus 103 is not present in receptacle 115 (i.e. in certain present implementations, when stylus 103 is not present in receptacle 115, first antenna 105 is not electrically connected to circuit 137).

For example, circuit 137 can be further enabled to switch between first antenna 105 and second antenna 125 when stylus 103 is respectively present and not present in receptacle 115. Indeed, as depicted, device 101 can further comprise an optional switch 150 (which can be part of circuit 137, as depicted, or external to circuit 137) for switching circuit 137 between first antenna 105 and second antenna 125 when stylus 103 is respectively present and not present in receptacle 115.

However, in other implementations, circuit 137 can perform RF matching with both first antenna 105 and second antenna 125 when stylus 103 is present in receptacle 115. In other words, in these implementations, first antenna 105 and second antenna 125 comprise a multi-antenna system, and circuit 137 is tuned accordingly.

Device 101 can be any type of electronic device that can be used in a self-contained manner to communicate with one or more communication networks (note depicted) using antennas 105, 125. Device 101 includes, but is not limited to, any suitable combination of electronic devices, communications devices, computing devices, personal computers, laptop computers, portable electronic devices, mobile computing devices, portable computing devices, tablet computing devices, laptop computing devices, desktop phones, telephones, PDAs (personal digital assistants), cellphones, smartphones, e-readers, internet-enabled appliances and the like. In particular, device 101 can comprise a mobile device. Other suitable devices are within the scope of present implementations.

It is appreciated that Fig. 1 further depicts an example structure of device 101, however, it should be emphasized that the structure of device 101 in Fig. 1 is purely an example, and contemplates a device that can be used for both wireless voice (e.g. telephony) and wireless data communications (e.g. email, web browsing, text, and the like). However, while Fig. 1 contemplates a device that can be used for telephony, in other implementations, device 101 can comprise a device enabled for implementing any other suitable specialized functions, including, but not limited, to one or more of, computing, appliance, and/or entertainment related functions.

Device 101 generally comprises at least one input device 128 generally enabled to receive input data, and can comprise any suitable combination of input devices, including but not limited to a keyboard, a keypad, a pointing device, a mouse, a track wheel, a trackball, a touchpad, a touch screen and the like. Other suitable input devices are within the scope of present implementations.

Input from input device 128 is received at processor 120 (which can be implemented as a plurality of processors, including but not limited to one or more central processors (CPUs)). Processor 120 is configured to communicate with a memory 122 comprising a non-volatile storage unit (e.g. Erasable Electronic Programmable Read Only Memory ("EEPROM"), Flash Memory) and a volatile storage unit (e.g. random access memory ("RAM")). Programming instructions that implement the functional teachings of device 101 as described herein are typically maintained, persistently, in memory 122 and used by processor 120 which makes appropriate utilization of volatile storage during the execution of such programming instructions. Those skilled in the art will now recognize that memory 122 is an example of computer readable media that can store programming instructions executable on processor 120. Furthermore, memory 122 is also an example of a memory unit and/or memory module.

In particular, it is appreciated that memory 122 stores an application 165 that, when processed by processor 120, enables processor 120 to: detect when stylus 103 is present and not present in receptacle 115; and, in response, activate a tuning procedure to perform RF matching at the at least one antenna tuning circuit 137 to account for an electrical connection, or lack thereof, between the at least one antenna tuning circuit 137 and first antenna 105.

For example, processor 120 can be in communication with RF contact 141-1, either via circuit 137, and/or an optional interrupt line 160 between contact 140-1 and processor 120; contact between contacts 140-1, 141-1 triggers a dedicated stylus interrupt at processor 120, which then activates an RF tuning procedure at circuit 137, as described above.

Processor 120 can be further configured to communicate with display 126, and microphone 134 and speaker 132. Display 126 comprises any suitable one of, or combination of, CRT (cathode ray tube) and/or flat panel displays (e.g. LCD (liquid crystal display), plasma, OLED (organic light emitting diode)), capacitive or resistive touchscreens, and the like. Indeed, display 126 can generally comprise a touchscreen, and stylus 103 can be enabled to interact with the touchscreen, for example via a rounded pointed tip of stylus 103, as apparent from Fig. 1. Hence, stylus 103 performs a dual function: stylus 103 acts as both an input device and as an antenna 105, when present in receptacle.

Microphone 134 comprises any suitable microphone for receiving sound and converting sound to sound data. Speaker 132 comprises any suitable speaker for providing sound data

In some implementations, input device 128 and display 126 can be external to device 101, with processor 120 in communication with each of input device 128 and display 126 via a suitable connection and/or link.

Processor 120 also connects to interface 124, which can be implemented as one or more radios and/or connectors and/or network adaptors, configured to wirelessly communicate with one or more communication networks (not depicted) via antennas 105, 125. It will be appreciated that interface 124 is configured to correspond with network architecture that is used to implement one or more communication links to one or more communication networks (not depicted), including but not limited to any suitable combination of USB (universal serial bus) cables, serial cables, wireless links, cell-phone links, cellular network links (including but not limited to 2G, 2.5G, 3G, 4G+, UMTS (Universal Mobile Telecommunications System), CDMA (Code division multiple access), WCDMA (Wideband CDMA), FDD (frequency division duplexing), TDD (time division duplexing), TDD-LTE (TDD-Long Term Evolution), TD-SCDMA (Time Division Synchronous Code Division Multiple Access) and the like, wireless data, Bluetooth links, NFC (near field communication) links, WiFi links, WiMax links, packet based links, the Internet, analog networks, the PSTN (public switched telephone network), access points, and the like, and/or a combination.

Specifically, interface 124 comprises radio equipment (i.e. a radio transmitter and/or radio receiver) for receiving and transmitting signals using antenna 105, 125. It is further appreciated that interface 124 comprises at least one antenna tuning circuit 137, which can, in turn, comprise a variable tuning circuit for tuning antennas 105, 125, for example by matching impedance of one or more of antennas 105, 125 to the radio equipment. The variable tuning circuit can hence comprise any suitable combination of capacitors and impedance coils (also referred to as inductors) for matching impedance of antennas 105, 125 to the radio equipment of interface 124. It is yet further appreciated that interface 124 can comprise one antenna tuning circuit 137 that performs RF matching for both antennas 105, 125, and/or interface 124 can comprise respective antenna tuning circuits 137 for each of antennas 105, 125. When each antenna 105,125 is used alone, the respective antenna tuning circuit 137 can be used to perform RF matching for each respective antenna 105, 125; when antennas 105, 125 are used together as components of a multi-antenna system, respective antenna tuning circuits 137 can be used in tandem, or one of the antenna tuning circuits 137 can be used a primary antenna tuning circuit to perform RF matching with both antennas 105, 125.

It is yet further appreciated that device 101 comprises a power source, not depicted, for example a battery or the like. In some implementations the power source can comprise a connection to a mains power supply and a power adaptor (e.g. and AC-to-DC (alternating current to direct current) adaptor).

Receptacle 115 generally comprises a receptacle for storing stylus 103 when stylus 103 is not in use. As such, receptacle 115 is generally enabled to store stylus 103 within a front, rear, top, bottom or side of device 101, though stylus 103 can be at least partially outside device 101 when stored in receptacle 115. Further, when stylus 103 is stored in receptacle 115, stylus 103 is generally parallel to the side in which it is stored, such that stylus 103 and device 101 can be easily transported. In other words, is not substantially extending perpendicularly from device 101 in a manner that would cause stylus 103 to be easily dislodged from receptacle 115.

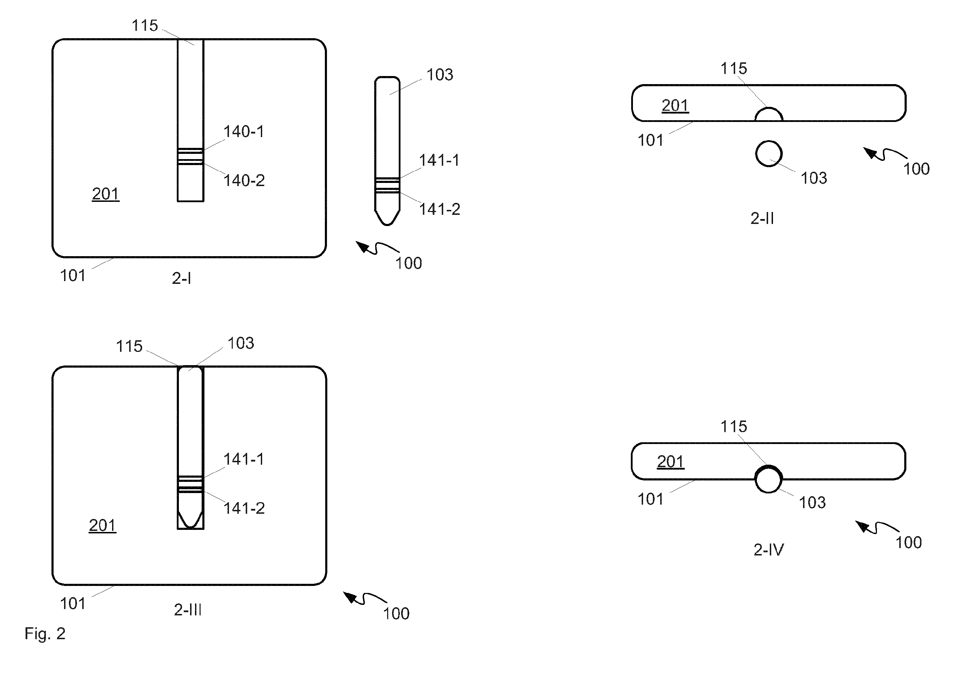

Receptacle 115 and stylus 103 are hence complementary to one another, with receptacle 115 enabled to receive stylus 103 therein. For example, attention is next directed to Fig. 2, which depicts various views of an implementation of system 100, and further depicts a chassis 201 of device 101, which contains processor 120, memory 122, interface 124 (including circuit 137 and switch 150, if present), second antenna 125, display 126, input device 128, speaker 132, and microphone 134.

Specifically, views 2-I, 2-II respectively depict back and top views of system 100 with stylus 103 not present in receptacle 115, and view 2-III, 2-IV respectively depict back and top views of system 100 with stylus 103 present in receptacle 115. Further, from Fig. 2, it is apparent that receptacle 115 comprises a groove in a rear of device 101, such that stylus 103 can be easily "snapped" into receptacle 115 (as in views 2-III, 2-IV), and easily unsnapped there from (as in views 2-1, 2-III). However, in other implementations, receptacle 115 can comprise one or more of a groove a slot, and a container for stylus 103 that is generally parallel to the rear of device 101 (and/or generally parallel to a side of device 101 in which stylus 103 is stored). Further, as antenna 105 of stylus 103 acts as an antenna for device 101 when present in receptacle 115, it is appreciated that receptacle is enabled to not interfere with RF communications with antenna 105; hence receptacle 115 comprises one or more of non-conducting materials, non-magnetic materials and any suitable plastic. For example, as in depicted implementations, receptacle 115 comprises a groove in chassis 201, chassis 201 can comprise a similar material as receptacle 115, and indeed chassis 201 and receptacle 115 can be integral with each other.

It is further apparent from Fig. 2 that, in depicted implementations, receptacle 115 comprises contacts 140, for example, as semi-circular contacts within receptacle 115, and further contacts 140 are located such that when stylus 103 is present in receptacle 115, contacts 141 contact contacts 140. It is hence further apparent that contacts 141 are circular and generally complementary to contacts 140, and similarly located on stylus 103 such that when stylus 103 is present in receptacle 115, contacts 141 contact contacts 140.

View 2-II further shows that, in these implementations, when stylus 103 is present in receptacle 115, stylus 103 is at least partially outside chassis 201. In other words, as receptacle 115 comprises a groove, receptacle 115 only partially encompasses stylus 103 when stylus 103 is present therein, with stylus 103 at least partially outside chassis 201 in a longitudinal direction when stylus 103 is stored therein. Put yet another way, receptacle 115 is enabled to frictionally engage stylus 103 along a longitudinal direction of stylus 103 to retain stylus 103 therein. Further, receptacle 115 could also comprise one or more grooves that are spaced longitudinally along stylus 103 when stylus 103 is retained therein.

It is further appreciated that the mechanical interaction of receptacle 115 and stylus 103, that removably and longitudinally retains stylus 103 at receptacle 115 is generally non-limiting. For example, in some implementations, receptacle 115 can comprise a longitudinal ridge and stylus 103 can comprise a complementary longitudinal slot, with receptacle 115 retaining stylus 103 when the longitudinal slot is slid onto the longitudinal ridge, as with contacts 140, 141 contacting each other as described above.

Similarly, stylus 103 generally comprises a stylus device with a blunt tip for interacting with a touchscreen of display 126, and antenna 105 integrated therein as described above. Stylus 103 is generally cylindrical in shape with a longitudinal axis, a longitudinal side of which being retained by receptacle 115 when present therein.

In any event, it should be understood that a wide variety of configurations for device 101, and stylus 103, are contemplated.

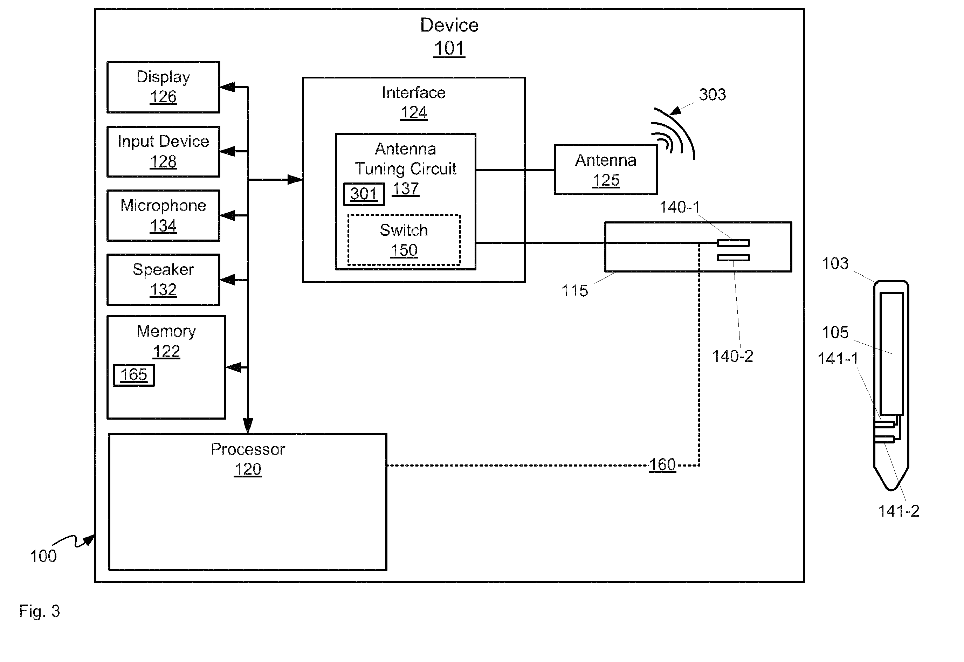

Attention is next directed to Fig. 3, which is substantially similar to Fig. 1, with like elements having like numbers, and depicts system 100 in operation when stylus 103 is not present in receptacle 115 (i.e. as in views 2-I, 2-II of Fig. 2). It is appreciated that, in these implementations, processor 120 has detected that stylus 103 is not present in receptacle 115, for example via interrupt line 160, and has activated a tuning procedure 301 is activated at circuit 137 to perform RF matching at circuit 137 with antenna 125. The result is that, in these implementations, device 101 communicates via antenna 125, as indicated by RF signals 303 at antenna 125.

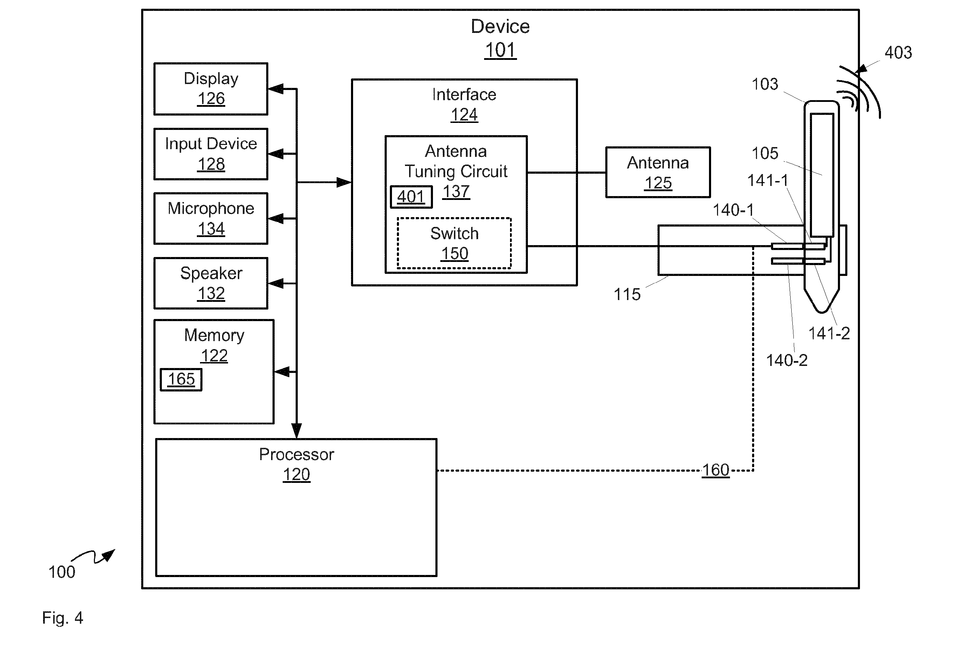

Attention is next directed to Fig. 4, which is substantially similar to Fig. 1, with like elements having like numbers, and depicts system 100 in operation when stylus 103 is present in receptacle 115 (i.e. as in views 2-III, 2-IV of Fig. 2). It is appreciated that, in these implementations, processor 120 has detected that stylus 103 is present in receptacle 115, for example via interrupt line 160, and has activated a tuning procedure 401 is activated at circuit 137 to perform RF matching at circuit 137 with antenna 105. In these implementations, switch 150, when present, can switch circuit 137 from antenna 125 to antenna 105. The result is that, in these implementations, device 101 communicates via antenna 105, as indicated by RF signals 403 at antenna 105.

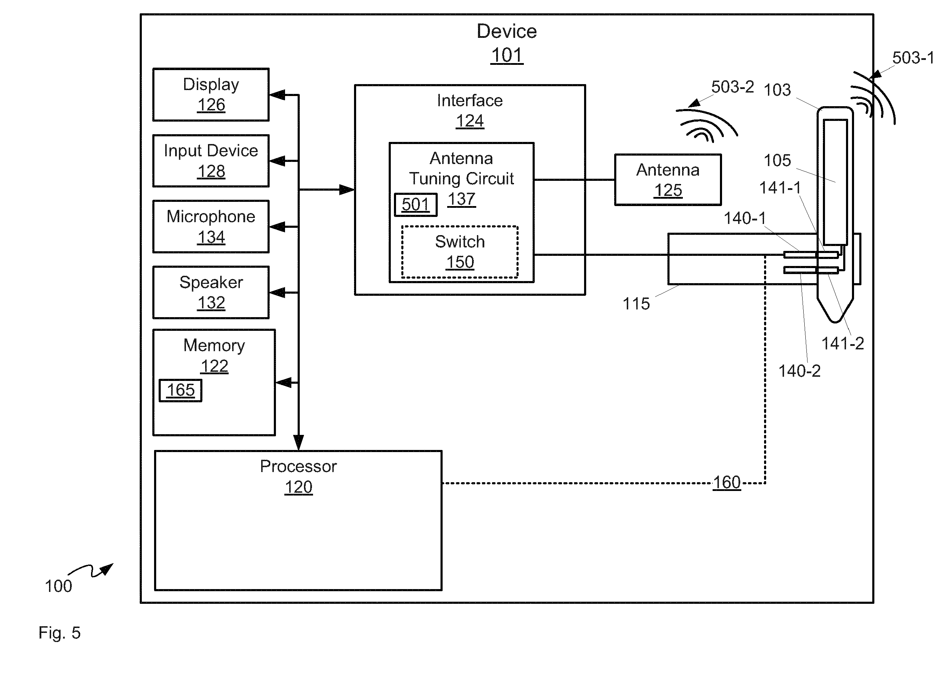

Attention is next directed to Fig. 5, which is substantially similar to Fig. 1, with like elements having like numbers, and depicts system 100 in an alternative operation mode when stylus 103 is present in receptacle 115(i.e. as in views 2-III, 2-IV of Fig. 2). It is appreciated that, in these implementations, processor 120 has detected that stylus 103 is present in receptacle 115, for example via interrupt line 160, and has activated a tuning procedure 501 at circuit 137 to perform RF matching at circuit 137 with both antenna 105 and antenna 125. The result is that, in these implementations, device 101 communicates via both antenna 105 and antenna 125, as indicated by respective RF signals 503-1, 503-2 at each antenna 105, 125. It is appreciated that, in these implementations, antenna 105 and antenna 125 form multi-antenna system and/or a multi-component antenna.

It is yet further appreciated that, in some implementations, device 101 can switch between the different modes operating depicted in Figs 4 and 5. For example, when an error rate of received data at device 101 is above a threshold value, and/or reception is below a respective threshold value, when operating in the mode depicted in Fig 4, device 101 can switch to the operating mode of Fig. 5 to attempt to decrease the error rate and/or improve reception using multiple antennas 105, 125.

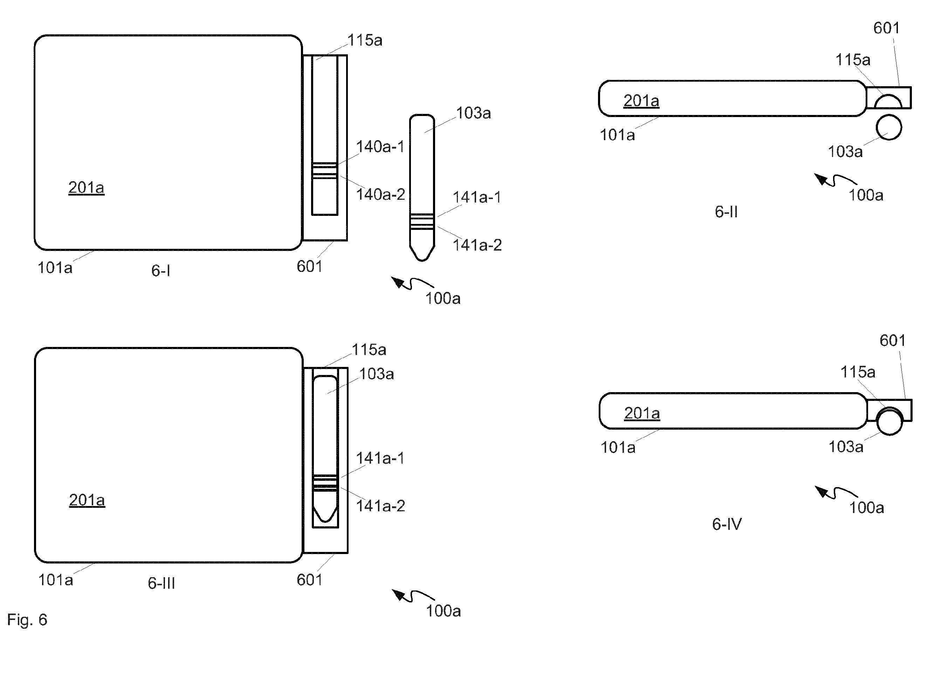

Persons skilled in the art will appreciate that there are yet more alternative implementations and modifications possible, and that the above examples are only illustrations of one or more implementations. For example, attention is next directed to Fig. 6, which depicts various perspective views 6-I, 6-II, 6-III, 6-IV of an alternative device system 100a, which is substantially similar to device system 100, with like elements having like numbers, however with an "a" appended thereto. Hence, device system 100 comprises a device 101a, a stylus 103a comprising a first antenna (not depicted), similar to first antenna 105, connected to contacts 141a-1, 141a-2. Device 101a comprises a chassis 201a which contains (not depicted, but appreciated to be nonetheless present) a processor, a memory, a communication interface (including at least one antenna tuning circuit, and an optional), a second antenna, a display, at least one input device, a speaker, and a microphone, each respectively similar to processor 120, memory 122, interface 124, circuit 137, switch 150 (if present), second antenna 125, display 126, input device 128, speaker 132, and microphone 134. Further device 101a comprises a receptacle 115a mounted on chassis 201a, receptacle 115a comprising contacts 140a-1, 140a-2, with at least RF contact 140a-1 in electrical communication with he at least one tuning circuit (not depicted) through chassis 201a. Indeed, it is appreciated that device 101a further comprises a receptacle portion 601 mounted to chassis 201a in any suitable manner (e.g. removably, permanently and the like), receptacle portion 601 comprising receptacle 115a: for example, receptacle 115a can comprise a groove, and the like in receptacle portion 601.

It is further appreciated that Fig. 6 is substantially similar to Fig. 2, with each view 6-I, 6-II, 6-III, 6-IV substantially similar to a respective view 2-I, 2-II, 2-III, 2-IV. Indeed, from Figs. 6 and 2, it is appreciated that the main difference between system 100a and system 100 is that: in system 100a, receptacle 115a is mounted on chassis 201a (i.e. receptacle portion 601, comprising receptacle 115a, is mounted on chassis 201a); while in system 100 chassis 201 comprises receptacle 115.

Further, while in depicted implementations receptacle 115a is shown as facing a rear of device 101a, in other implementations, receptacle 115a can face a front of device 101a, such that stylus 103a is accessible to a user of device 101a while the user is facing a front of device 101a.

Indeed, it is appreciated that the location of receptacle 115 and/or receptacle 115a with respect to one or more of front, rear, top, bottom and/or sides of device 101 and/or device 101a is generally non-limiting. In other words, receptacle 115 and/or receptacle 115a can be located at a front, rear, top, bottom and/or along sides of device 101 and/or device 101a.

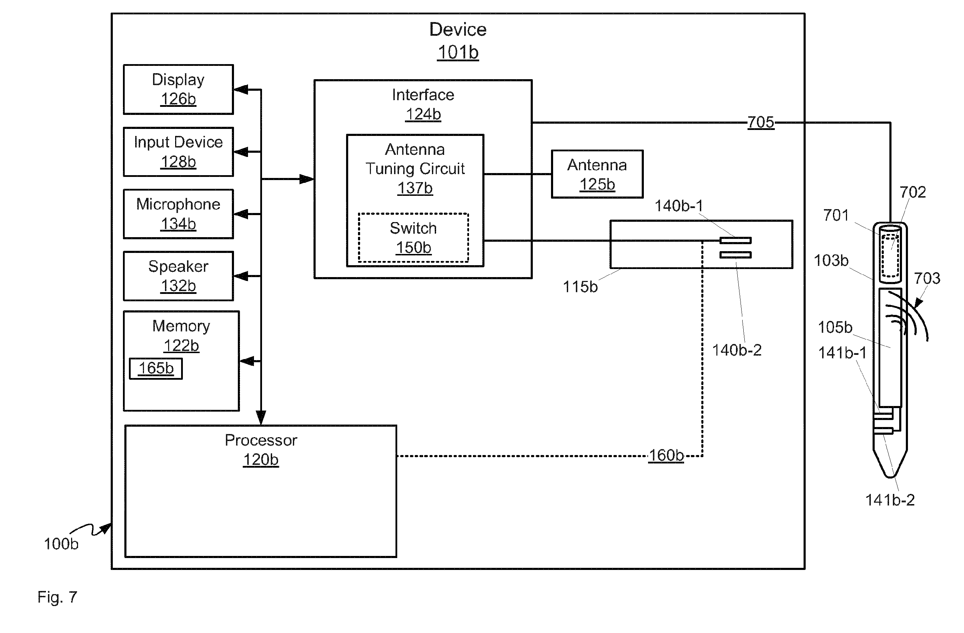

Attention is next directed to Fig. 7, which depicts yet another alternative implementation of a device system 100b, which is substantially similar to device system 100, with like elements having like numbers, however with a "b" appended thereto. Hence, system 100b comprises a device 101b and a stylus 103b comprising a first antenna 105b. Device 101b comprises a receptacle 115b for stylus 103b, a processor 120b interconnected with a memory 122b (storing application 165b), a communications interface 124b (interchangeably referred to hereafter as interface 124b), a second antenna 125b, a display 126b, an input device 128b, a speaker 132b, and a microphone 134b. Further, interface 124b comprises at least one antenna tuning circuit 137b (interchangeably referred to hereafter as circuit 137b) and an optional switch 150b. Further receptacle 115b comprises a contacts 140b-1, 140b-2. Processor 120b can further be in electrical communication with contact 140b-1 via an interrupt line 160b.

Further stylus 103b, depicted as not present in receptacle 115b, comprises antenna 105b, and contacts 141b-1, 141b-2. However, in contrast to antenna 105, antenna 105a comprises an active antenna and stylus 103b further comprises a battery receptacle 701 for receiving a battery 702 for powering antenna 105b.

In other words, antenna 105b is enabled to send and receive data via RF signals 703, and relay the wireless data to interface 124b via a wireless link 705. Transmission of data, corresponding to RF signals 703, along link 705, is powered by battery 702. It is yet further appreciated that wireless link 705 can comprise any suitable wireless link, including but not limited to a local wireless link, a Bluetooth™ link, a NFC (near field communication) link, a WiFi link and the like. It is yet further appreciated that interface 124b is enabled to communicate with stylus 103b via link 705 using network architecture that is used to implement link 705. While not depicted, it is yet further appreciated that stylus 103b can comprise similar communications interface for communicating over link 705. Further stylus 103b can comprise an antenna tuning circuit (not depicted), which can be similar to circuit 137b, for performing RF matching with active antenna 105b. In addition, stylus 103b can comprise a processor (including but not limited to a microcontroller) and a memory.

Furthermore, communication interface 124b is generally enabled to communicate with active antenna 103b when stylus 103b is not present in receptacle 115b and when the interface 124b is in range of active antenna 103b. In other words, RF data corresponding to RF signals 703 are only exchanged with interface 124b when link 705 is active, and link 705 can be severed when active antenna 103b is out of range of interface 124b and/or when battery 702 "dies". As stylus 103b enters and leave a range of interface 124b, an RF tuning procedure can be performed at circuit 137b to account for the presence or absence of active antenna 103b, for example to perform RF matching with antenna 125b.

Detection of stylus 103b entering or leaving a range of interface 124b can be performed by determining, at one or more of interface 124b and processor 120b, whether data is being received via link 705. In some instances stylus 103b can be periodically pinged via link 705: when a response is received, stylus 103b is determined to be in range of interface 124b; and when a response is not received, stylus 103b is determined to be out of range of interface 124b.

It is yet further appreciated that when antenna 115b is in receptacle 115b device 101b otherwise behaves similar to device 101. For example, when battery 702 dies/runs out of power, and/or active antenna 103b is no longer active and/or link 705 has been severed, stylus 103b can be received at receptacle 115b and antenna 105b can again used to receive and transmit RF signals to convey data between device 101b and at least one communication network.

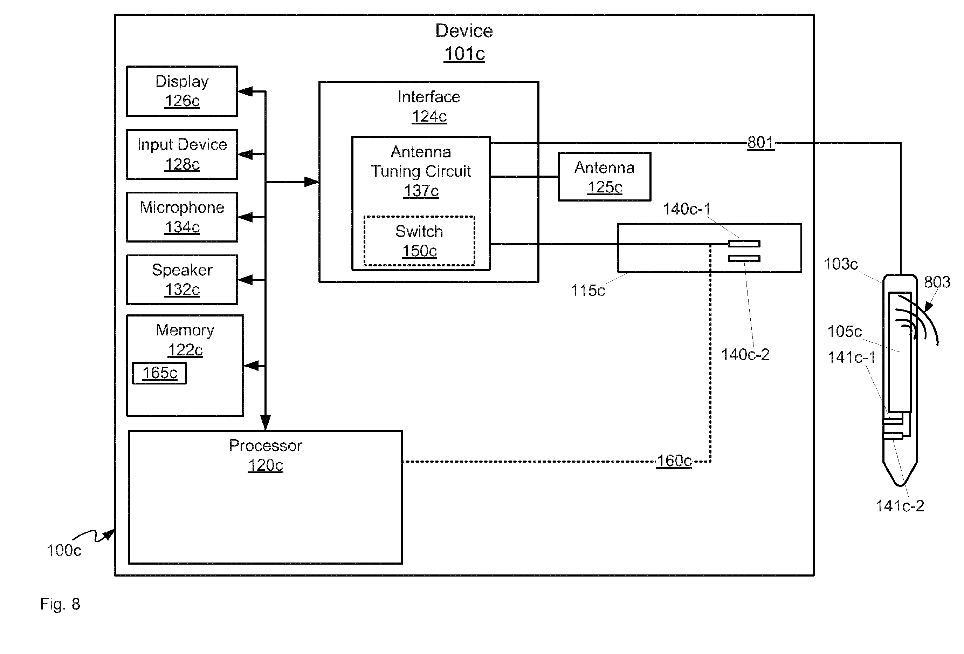

Attention is next directed to Fig. 8, which depicts yet another alternative implementation of a device system 100c, which is substantially similar to device system 100b, with like elements having like numbers, however with a "c" appended thereto rather than a "b". Hence, system 100c comprises a device 101c and a stylus 103c comprising a first antenna 105c. Device 101c comprises a receptacle 115c for stylus 103c, a processor 120c interconnected with a memory 122c (storing application 165c), a communications interface 124c (interchangeably referred to hereafter as interface 124c), a second antenna 125c, a display 126c, an input device 128c, a speaker 132c, and a microphone 134c. Further, interface 124c comprises at least one antenna tuning circuit 137c (interchangeably referred to hereafter as circuit 137c) and an optional switch 150c. Further receptacle 115c comprises a contacts 140c-1, 140c-2. Processor 120c can further be in electrical communication with contact 140c-1 via an interrupt line 160c. While not depicted, it is further appreciated that device 101c further comprises a chassis, similar to chassis 201.

Further stylus 103c, depicted as not present in receptacle 115c, comprises antenna 105c, and contacts 141c-1, 141c-2. However, in contrast to devices 101, 101a, 101b device 101c further comprises an electrical tether 801 for both physically tethering stylus 103c to the chassis, and electrically connecting first antenna 105c to the at least one antenna tuning circuit 137c. In some implementations, electrical tether 801 is retractable using any suitable retraction mechanism.

In other words, antenna 105c is in communication with circuit 137c via electrical tether 801, which can, itself, act as one or more of an antenna and/or a portion of antenna 105c. In other words, electrical tether 801 comprises a suitably insulated electrical wire physically and electrically connecting antenna 105c to circuit 137c. In some implementations, the physical integrity of the electrical wire of electrical tether 801 can be enhanced using, for example, a tether of flexible material, a flexible plastic lone, and the like (i.e. electrical tether can further comprise a tether of flexible material).

Hence, while circuit 137c is otherwise similar to circuit 137, and performs RF matching with antenna 105c when stylus 103c is present in receptacle 115c, circuit 137c is further enabled to: perform RF matching with first antenna 105c via electrical tether 801 when stylus 103c is not present in receptacle 115c; and, perform RF matching with second antenna 125c when an electrical connection with first antenna 105c is severed.

In other words, when electrical tether 801 is severed (e.g. by accident and/or due to excessive force placed on electrical tether 801), stylus 103c can be received in receptacle 115c and antenna 105cs can again be used to receive and transmit RF signals to convey data between device 101c and at least one communication network.

Furthermore, when electrical tether 801 is severed (which can be detected via detection of a change in impedance along electrical tether 801 by interface 124c, processor 120c and/or a combination), an RF tuning procedure can be performed at circuit 137c to perform RF matching with second antenna 125c.

In any event, it is appreciated that by using a stylus as an antenna when placed in a receptacle, as described herein, several technical problems relating to RF reception at devices can be addressed. These include, but are not limited to, RF antenna concealment, increasing RF receive signal sensitivity, increasing RF transmit signal intensity, and reducing battery consumption on RF system due to high reliability and availability of a transmit/receive signal. For example, many RF antennas are presently hidden inside mobile devices, but this tends to place severe constraints on a shape or size of the antenna, which can lead to reduced RF sensitivity, when either receiving or transmitting.

Hence, by using a stylus comprising an antenna, when placed into a receptacle at a device that is already used for storing the stylus, as described herein, the design of the antenna in the stylus is not restricted and/or limited to the physical restrictions of the device, leading to better antenna design, which improves the overall RF performance of the device. Indeed, as the stylus antenna is at least partially outside of a device and/or a receptacle can be made from materials which do not interfere with RF signal, the stylus antenna will have improved receiver sensitivity over an antenna internal to the device. Further, as the stylus antenna is located outside of a device, there is a reduced likelihood of interference from a user's hand, which could block an internal antenna while the device is being held in certain positions. Hence, overall communication reliability of the device is improved.

Indeed, with improved RF reliability, improved RF clearance (i.e. reduced likelihood of interference by a user) and improved RF signal strength, a device (and especially a mobile device) will have reduced RF interference which, in turn, reduces the amount of energy used to transmit data (e.g. the number of 'retries' for transmitting and receiving data is reduced), which results in overall battery consumption being reduced, and hence longer battery life.

Further, in contrast to previous external antennas, most users will view a stylus antenna, not as an antenna, but as a stylus, and hence the stylus antenna is also less distracting than an external antenna.

Those skilled in the art will appreciate that in some implementations, the functionality of device systems 100, 100a, 100b, 100c can be implemented using preprogrammed hardware or firmware elements (e.g., application specific integrated circuits (ASICs), electrically erasable programmable read-only memories (EEPROMs), etc.), or other related components. In other implementations, the functionality of device systems 100, 100a, 100b, 100c can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Furthermore, it is appreciated that the computer-readable program can be stored as a computer program product comprising a computer usable medium. Further, a persistent storage device can comprise the computer readable program code. It is yet further appreciated that the computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., microwave, infrared, free-space optical or other transmission schemes) or a combination thereof.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

Persons skilled in the art will appreciate that there are yet more alternative implementations and modifications possible, and that the above examples are only illustrations of one or more implementations. The scope, therefore, is only to be limited by the claims appended hereto.

## Claims

1. A device system (100) comprising:
a stylus (103) comprising a first antenna (105);
a receptacle (115) for the stylus (103);
a second antenna (125); and,
at least one antenna tuning circuit (137) enabled to:
perform RF (radio-frequency) matching with the first antenna (105) when the stylus (103) is present in the receptacle (115) to at least one of transmit and receive data via the first antenna (105); and,
perform RF matching with the second antenna (125) when the stylus (103) is not present in the receptacle (115) to at least one of transmit and receive the data via the second antenna (125).

2. The device system (100) of claim 1, further comprising at least one electrical contact (140) for electrically connecting the antenna tuning circuit (137) to the first antenna (105) when the stylus (103) is present in the receptacle (115).

3. The device system (100) of claim 2, wherein the at least one electrical contact (140) comprises an RF (radio-frequency) contact (140-1) and a ground contact (140-2) in the receptacle (115).

4. The device system (100) of claim 3, wherein the stylus (103) comprises a corresponding RF contact (141-1) and a corresponding ground contact (141-2) for connecting, respectively to the RF contact (140-1) and the ground contact (140-2) when the stylus (103) is present in the receptacle (115).

5. The device system (100) of any of claims 1 to 4, wherein the receptacle (115) comprises one or more of a slot, a groove and a container.

6. The device system (100) of any of claims 1 to 5, wherein the receptacle (115) comprises one or more of non-conducting materials, non-magnetic materials and plastic.

7. The device system (100) of any of claims 1 to 6, wherein the receptacle (115) is enabled to retain the stylus (103) along a longitudinal side of the stylus (103).

8. The device system (100) of any of claims 1 to 7, further comprising a processor (120) enabled to: detect when the stylus (103) is present and not present in the receptacle (115); and, in response, activate a tuning procedure to the perform RF matching at the at least one antenna tuning circuit (137) to account for an electrical connection, or lack thereof, between the at least one antenna tuning circuit (137) and the first antenna (105).

9. The device system (100) of any of claims 1 to 8, wherein the at least one antenna tuning circuit (137) is further enabled to switch between the first antenna (105) and the second antenna (125) when the stylus (103) is respectively present and not present in the receptacle (115).

10. The device system (100) of any of claims 1 to 9, further comprising a switch (150) for switching the at least one antenna tuning circuit (137) between the first antenna (105) and the second antenna (125) when the stylus (103) is respectively present and not present in the receptacle (115).

11. The device system (100) of any of claims 1 to 8, wherein the at least one antenna tuning circuit (137) is further enabled to perform RF matching with both the first antenna (105) and the second antenna (125) when the stylus (103) is present in the receptacle (115).

12. The device system (100) of any of claims 1 to 10, wherein the at least one antenna tuning circuit (137) is further enabled to: perform RF matching with the first antenna (105), and not the second antenna (125), when the stylus (103) is present in the receptacle (115); and perform RF matching with the second antenna (125), and not the first antenna (105), when the stylus (103) is not present in the receptacle (115).

13. The device system (100) of any of claims 1 to 12, further comprising a chassis (201), the chassis (201) comprising the receptacle (115) or the receptacle (115) is mounted on the chassis (201), wherein the receptacle (115) is enabled to hold the stylus (103) at least partially outside the chassis (201) when the stylus (103) is present in the receptacle (115).

14. The device system (100) of any of claims 1 to 13, further comprising a communication interface (124b), wherein the first antenna (105) comprises an active antenna and the stylus (103) further comprises a battery receptacle (701) for receiving a battery (702) for powering the active antenna; and the communication interface (124b) is enabled to: communicate with the active antenna when the stylus (103) is not present in the receptacle (115) and when the communication interface (124b) is in range of the active antenna.

15. The device system (100) of any of claims 1 to 13, further comprising a chassis (201) and an electrical tether (801) for both physically tethering the stylus (103) to the chassis (201), and electrically connecting the first antenna (105) to the at least one antenna tuning circuit (137), wherein the at least one antenna tuning circuit (137) is further enabled to: perform RF matching with the first antenna (105) via the electrical tether when the stylus (103) is not present in the receptacle (115); and, perform RF matching with the second antenna (125) when an electrical connection with first antenna (105) is severed.

## Amended claims

### Amended claims in accordance with Rule 137(2) EPC.

**1.** A device system (100) comprising:
a stylus (103) comprising a first antenna (105);
a receptacle (115) enabled to frictionally engage the stylus (103) along a longitudinal direction of stylus (103) to retain and store stylus (103) therein;
a second antenna (125); and,
at least one antenna tuning circuit (137) enabled to:
perform RF (radio-frequency) matching with the first antenna (105) when the stylus (103) is present in the receptacle (115) to at least one of transmit and receive data via the first antenna (105); and,
perform RF matching with the second antenna (125) when the stylus (103) is not present in the receptacle (115) to at least one of transmit and receive the data via the second antenna (125),
the receptacle (115) comprising at least one electrical contact (140) therein, and the stylus (103) comprising at least one corresponding electrical contact (141) which electrically contacts the at least one electrical contact (140) when the stylus (103) is present in receptacle (115), the at least one electrical contact (140) for electrically connecting the antenna tuning circuit (137) to the first antenna (105) when the stylus (103) is present in the receptacle (115), each of the at least one electrical contact (140) in the receptacle (115) and the at least one corresponding electrical contact (141) being circular.

**2.** The device system (100) of claim 1, wherein the at least one electrical contact (140) comprises an RF (radio-frequency) contact (140-1) and a ground contact (140-2) in the receptacle (115).

**3.** The device system (100) of claim 2, wherein the at least one corresponding electrical contact (141) comprises a corresponding RF contact (141-1) and a corresponding ground contact (141-2) for connecting, respectively to the RF contact (140-1) and the ground contact (140-2) when the stylus (103) is present in the receptacle (115).

**4.** The device system (100) of any of claims 1 to 3, wherein the receptacle (115) comprises one or more of a slot, a groove and a container.

**5.** The device system (100) of any of claims 1 to 4, wherein the receptacle (115) comprises one or more of non-conducting materials, non-magnetic materials and plastic.

**6.** The device system (100) of any of claims 1 to 5, further comprising a processor (120) enabled to: detect when the stylus (103) is present and not present in the receptacle (115); and, in response, activate a tuning procedure to perform the RF matching at the at least one antenna tuning circuit (137) to account for an electrical connection, or lack thereof, between the at least one antenna tuning circuit (137) and the first antenna (105).

**7.** The device system (100) of any of claims 1 to 6, wherein the at least one antenna tuning circuit (137) is further enabled to switch between the first antenna (105) and the second antenna (125) when the stylus (103) is respectively present and not present in the receptacle (115).

**8.** The device system (100) of any of claims 1 to 7, further comprising a switch (150) for switching the at least one antenna tuning circuit (137) between the first antenna (105) and the second antenna (125) when the stylus (103) is respectively present and not present in the receptacle (115).

**9.** The device system (100) of any of claims 1 to 6, wherein the at least one antenna tuning circuit (137) is further enabled to perform RF matching with both the first antenna (105) and the second antenna (125) when the stylus (103) is present in the receptacle (115).

**10.** The device system (100) of any of claims 1 to 8, wherein the at least one antenna tuning circuit (137) is further enabled to: perform RF matching with the first antenna (105), and not the second antenna (125), when the stylus (103) is present in the receptacle (115); and perform RF matching with the second antenna (125), and not the first antenna (105), when the stylus (103) is not present in the receptacle (115).

**11.** The device system (100) of any of claims 1 to 10, further comprising a chassis (201), the chassis (201) comprising the receptacle (115) or the receptacle (115) is mounted on the chassis (201), wherein the receptacle (115) is enabled to hold the stylus (103) at least partially outside the chassis (201) when the stylus (103) is present in the receptacle (115).

**12.** The device system (100) of any of claims 1 to 11, further comprising a communication interface (124b), wherein the first antenna (105) comprises an active antenna and the stylus (103) further comprises a battery receptacle (701) for receiving a battery (702) for powering the active antenna; and the communication interface (124b) is enabled to: communicate with the active antenna when the stylus (103) is not present in the receptacle (115) and when the communication interface (124b) is in range of the active antenna.

**13.** The device system (100) of any of claims 1 to 11, further comprising a chassis (201) and an electrical tether (801) for both physically tethering the stylus (103) to the chassis (201), and electrically connecting the first antenna (105) to the at least one antenna tuning circuit (137), wherein the at least one antenna tuning circuit (137) is further enabled to: perform RF matching with the first antenna (105) via the electrical tether when the stylus (103) is not present in the receptacle (115); and, perform RF matching with the second antenna (125) when an electrical connection with first antenna (105) is severed.
